# EUROPEAN PATENT SPECIFICATION

(11) **EP 2 147 806 B1**
(45) Date of publication and mention of the grant of the patent: **03.07.2013**
(21) Application number: 09165918.5
(22) Date of filing: 20.07.2009
(51) Int. Cl.: B60C 11/00, C08K 3/00

(54) **Tire with tread having a two-ply tread cap layer**
Reifen mit Lauffläche, die eine zweilagige Laufflächenkronenschicht aufweist
Pneu avec une chape doté d'une couche de bande à deux plis

(30) Priority: 24.07.2008 US 178719
(43) Date of publication of application: 27.01.2010
(73) Proprietor: The Goodyear Tire & Rubber Company, Akron, OH 44316-0001 (US)
(72) Inventor: Moorhead, Brandy Elizabeth, Uniontown, OH 44685 (US); Ryba, Jennifer Lyn, Wadsworth, OH 44281 (US); Bode, Matthias, D-63584, Gruendau (DE); Nowacki, Colleen Anne, Uniontown, OH 44685 (US); Shavers, Daniel Christian, Canton, OH 44708 (US); Hubell, Jr., David Ray, Hartville, OH 44632 (US); Curtis, Michael Howard, Stow, OH 44224 (US); Barker, Justin, Stow, OH 44224 (US); Nowacki, Marc Christopher, Uniontown, OH 44685 (US)
(74) Representative: Kutsch, Bernd

(56) References cited:
- EP-A- 0 576 130
- EP-A- 1 398 182
- EP-A- 1 897 703
- DE-A1- 19 731 525

## Description

### Field of the Invention

The invention relates to a tire with a tread of a cap/base construction comprising a two-ply or dual layered tread cap rubber layer comprising a combination of an outer tread cap layer and an inner tread cap layer together with an underlying tread base rubber layer which underlies the two-ply tread or dual layered cap layer. The tread cap layer is of a lug and groove configuration with at least a portion of the grooves extending through the outer tread cap layer into the inner tread cap layer without extending to the tread base rubber layer. The outer tread cap rubber layer comprises a relatively carbon black-rich rubber composition to promote dry traction for the tread running surface. The inner tread cap layer comprises a softer, relatively silica-rich rubber composition to promote wet traction for tread running surface as the outer tread cap layer wears away to expose the softer inner tread cap layer.

### Background for the Invention

For vehicular tires intended for high performance, dry traction for its tread running surface is often desirable. Such dry traction may be promoted, for example, by a combination of dry traction induced rubber composition and physically induced dry traction by an associated stiffness of the tread lugs of the tread cap layer.

In practice, as the height of the tread lugs decreases as the tread wears away (as the tread depth and height of the tread lugs decreases), it is envisioned that a geometrically induced increase in tread lug stiffness naturally occurs by the geometric reduction in tread lug height (resultant shorter tread lugs) with an associated auto-promotion (automatic promotion) of a stiffer "bite" of the tread lugs over the ground and an associated increase in dry traction of the tread over the ground (traction of the tread running surface over dry surfaces).

Relying upon this phenomenon of geometrically induced auto-promotion of stiffer "bite" of the tread lugs as they become shorter by wearing away, with an associated increase in dry traction (as a result of increased tread lug stiffness) of the tread running surface, it was envisioned that an opportunity of providing a rubber composition induced increase, or enhancement, of wet traction for the tread running surface might be presented at an expense of such aforesaid geometrically induced dry traction by providing an inner tread cap rubber layer of reduced stiffness.

In this manner then, it was envisioned that, as the outer tire tread wears away, an advantage of compositional wet traction enhancement may be promoted without significant sacrifice, or reduction, in dry traction.

Accordingly, for this invention, a tire tread is provided with lug and groove configured a dual layered tread cap layer in which the outer tread cap rubber layer is provided with a rubber composition to promote dry traction and the underlying inner tread cap rubber layer is provided with a rubber composition to promote wet traction for the tire tread as it becomes exposed as the outer tread wears away, and thereby a part of the tread running surface.

In an embodiment of the invention, at least a portion of the tread grooves extend radially inward through the outer cap rubber layer and into the underlying inner tread cap rubber layer.

In an embodiment of the invention, as the outer tread cap rubber layer, and its associated tread lugs with their running surfaces, wears away during the service of the tire over time, the underlying inner tread cap rubber layer, which extends radially outwardly into a portion of the lugs and into the grooves of the outer tread cap rubber layer, becomes exposed and thereby becomes a new portion of the running surface of the tread prior to the tread being sufficiently worn to warrant removing the tire from service. In this manner, then, the inner tread cap rubber layer presents a new running surface for the tread after a sufficient amount of the outer tread cap rubber layer wears away.

In one embodiment then, such tire is provided wherein at least a portion of said underlying inner tread cap rubber layer is positioned within at least one of said tread lugs of said outer tread cap rubber layer in a manner to become a running surface of the tire upon at least a portion of said lug of said outer tread cap layer wearing away (e.g. as the tire is run in service) to expose said tread cap inner rubber layer.

Historically, various dual layered tire treads have heretofore been proposed which are composed of a cap/base construction in which the outer tread cap rubber layer contains a running surface for the tire and the underlying tread base rubber layer provides, in a sense, a cushion for the tread cap layer, such as for example US-B- 6,959,743, corresponding with the preamble of claim 1, or of a dual tread base layer configuration, such as for example US-B- 6,095,217 as well as a cap/base construction in which the base layer extends into lugs of the tread and into its tread cap layer such as for example US-B-6,336,486.

In the description of this invention, the terms "rubber" and "elastomer" may be used interchangeably unless otherwise indicated. The terms "rubber composition", "compounded rubber" and "rubber compound", may be used interchangeably to refer to "rubber which has been blended or mixed with various ingredients" and the term "compound" relates to a "rubber composition" unless otherwise indicated. Such terms are well known to those having skill in the rubber mixing or rubber compounding art.

In the description of this invention, the term "phr" refers to parts of a respective material per 100 parts by weight of rubber, or elastomer. The terms "cure" and "vulcanize" may be used interchangeably unless otherwise indicated. The term "Tg", if used, means the middle point glass transition temperature of an elastomer determined by DSC (differential scanning calorimeter) at a heating rate of 10°C per minute as would be understood by those having skill in such art.

### Summary and Practice of the Invention

In accordance with this invention, a tire according to claim 1 is provided.

Dependent claims refer to preferred embodiments of the invention.

In one aspect of the invention, the rubber composition of said tread outer cap rubber layer has a dynamic storage modulus G' (at 100°C, 1% strain and 1 Hertz) in a range of from 3,000 to 7,000, alternately from 4,000 to 6,000, kPa and the rubber composition of said tread inner cap rubber layer has a dynamic storage modulus G' (at 100 °C, 1% strain and 1 Hertz) in a range of from 1,500 to 4,500, alternately from 2,500 to 4,000, kPa;
wherein said storage modulus G' of said rubber composition of said tread cap inner rubber layer is at least 1,000 kPa, alternately at least 1,500 kPa , less than said storage modulus G' of said rubber composition of said outer tread cap rubber layer.

The Shore A (100°C) hardness values of the sulfur cured rubber compositions of said tread outer cap rubber layer and said tread inner cap rubber layer are in a range of from 60 to 85 wherein said Shore A hardness of said rubber composition of said tread cap outer rubber layer is at least 5 Shore A hardness units greater than, and preferably 15, alternately 10, Shore A hardness units greater than the Shore A hardness of the rubber composition said inner tread cap rubber layer.

In yet another aspect of the invention, the sulfur cured carbon black-rich rubber composition of said outer tread cap rubber layer comprises, based upon parts by weight per 100 parts by weight rubber (phr):
(A) 100 phr of at least one conjugated diene-based elastomer;
(B) from 45 to 110 phr of a rubber reinforcing filler comprising:
   (1) from 40 to 100 phr of a rubber reinforcing carbon black,
   (2) from 5 to 30 phr of a silica such as synthetic amorphous silica (for example, precipitated silica); and
(C) a silica coupler having a moiety reactive with hydroxyl groups (e.g. silanol groups) on said silica and another different moiety interactive with said diene-based elastomer(s); and
   said silica-rich rubber composition of said inner tread cap rubber layer comprises, based upon parts by weight per 100 parts by weight rubber (phr):
(D) 100 phr of at least one conjugated diene-based elastomer;
(E) from 60 to 110, alternately from 75 to 110, phr of a rubber reinforcing filler comprising:
   (1) from 50 to 100, alternately from 50 to 75, phr of a silica such as synthetic amorphous silica (for example precipitated silica), and
   (2) from 10 to 45, alternately from 25 to 45, phr of a rubber reinforcing carbon black;
   wherein the rubber composition of said inner tread cap rubber layer contains at least 20 phr more of said silica reinforcement than said rubber composition of said outer tread cap rubber layer; and
(F) a silica coupler having a moiety reactive with hydroxyl groups (e.g. silanol groups) on said silica and another different moiety interactive with said diene-based elastomer(s).

The combination of the grooved tread cap rubber layer and associated underlying inner tread cap rubber layer is considered herein to be synergistic in a sense that, as the outer tread cap layer wears away during the service of the tire, with an associated geometrical stiffening of the included tread grooves which extend through the outer tread cap layer into the inner tread cap layer, the underlying inner tread cap rubber layer becomes a portion of the running surface of the tread in a manner that the running surface of the tire can present enhanced traction properties of the tire running surface to the road.

Accordingly, upon wearing away of the outer tread cap rubber layer during the service of the tire, with an associated geometrical stiffening of the tread lugs as they become shorter, to expose at least a portion of the inner tread cap rubber layer as a running surface of the tread, the running surface of the tread thereby presents a combination of dry and enhanced wet traction properties of the tire running surface to the road. In this manner, as the tread wears away, an enhanced wet traction for the running surface of the tread is promoted, in part by an inclusion of an increased precipitated silica content of the rubber composition of the inner tread cap rubber layer, while substantially maintaining the dry traction of the running surface of the tread (the bite of the tread running surface presented to the ground) by the geometrically increased stiffness of the tread lugs as they become shorter by being worn down.

In one embodiment, said inner tread cap rubber layer extends radially outward into and within at least a portion of at least one of said tread lugs such that the inner tread cap layer extends radially outward beyond a treadwear indicator within an associated tread groove. Use of treadwear indicators in various tires to visually indicate the end of the intended service life of the tire tread is well known to those having skill in such art. Accordingly, it is preferred that the inner tread cap rubber layer within the tread lug extends radially outward beyond the tread wear indicator in a manner that the inner tread cap rubber layer becomes exposed to and thereby a part of the tire tread's running surface as outer tread cap rubber layer wears away.

The preferably precipitated silica is normally used in combination with a coupling agent having a moiety reactive with hydroxyl groups contained on the surface of the silica (e.g. silanol groups) and another moiety interactive with said diene-based elastomers.

A coupling agent for such silica may, for example, be a bis(3-trialkoxysilylalkyl) polysulfide which contains an average of from 2 to 4, alternately an average of from 2 to 2.6 or an average of from 3.4 to 3.8, connecting sulfur atoms in its polysulfidic bridge. Representative of such coupling agent is for example, bis(3-triethoxysilylpropyl) polysulfide as being, for example, comprised of a bis(3-triethoxysilylpropyl) tetrasulfide, namely with the polysulfidic bridge comprised of an average of from 3.2 to 3.8 connecting sulfur atoms or a bis(3-triethoxysilylpropyl) disulfide with the polysulfidic bridge comprising an average of from 2.1 to 2.6 connecting sulfur atoms.

Alternately, such coupling agent may be an organomercaptosilane (e.g. an alkoxyorganomercaptosilane), and particularly an alkoxyorganomercaptosilane having its mercapto function reversibly capped.

In practice, the synthetic amorphous silica may be selected from aggregates of precipitated silica, which is intended to include precipitated aluminosilicates as a co-precipitated silica and aluminum.

The precipitated silica aggregates may be prepared, for example, by an acidification of a soluble silicate, e.g., sodium silicate, in the presence of a suitable electrolyte and may include co-precipitated silica and a minor amount of aluminum.

Such silicas might have a BET surface area, as measured using nitrogen gas, such as, for example, in a range of 40 to 600, and more usually in a range of 50 to 300 square meters per gram. The BET method of measuring surface area is described in the Journal of the American Chemical Society, Volume 60 (1938).

The silica might also have a dibutylphthalate (DBP) absorption value in a range of, for example, 50 to 400 cm³/100g, alternately from 100 to 300cm³/100g.

Various commercially available precipitated silicas may be considered for use in this invention such as, only for example herein, and without limitation, silicas from PPG Industries under the Hi-Sil trademark with designations Hi-Sil 210 or Hi-Sil 243; silicas from Rhodia as, for example, Zeosil 1165MP and Zeosil 165GR; silicas from J. M. Huber Corporation as, for example, Zeopol 8745 and Zeopol 8715; silicas from Degussa AG with, for example, designations VN2, VN3 and Ultrasil 7005; as well as other grades of precipitated silica.

Various rubber reinforcing carbon blacks might be used for the tread rubber compositions. Representative of various rubber reinforcing blacks may be referred to by their ASTM designations such as for example, N110, N121 and N234. Other rubber reinforcing carbon blacks may found, for example, in The Vanderbilt Rubber Handbook (1978), Page 417.

Representative of various diene-based elastomers for said tread cap rubber, said tread transition rubber layer and said optional base layer may include, for example, styrene-butadiene copolymers (prepared, for example, by organic solvent solution polymerization or by aqueous emulsion polymerization), isoprene/butadiene copolymers, styrene/isoprene/butadiene terpolymers and tin coupled organic solution polymerization prepared styrene/butadiene copolymers, cis 1,4-polyisoprene (including synthetic and natural cis 1,4-polyisoprene rubber) and cis 1,4-polybutadiene as well as trans 1,4-polybutadiene 3,4-polyisoprene and high vinyl polybutadiene rubber.

The thickness of the outer tread cap rubber layer is preferably in a range of 15% to 40% , alternatively 20% to 35%, of the total thickness of the tread cap layer.

### Brief Description of the Drawings

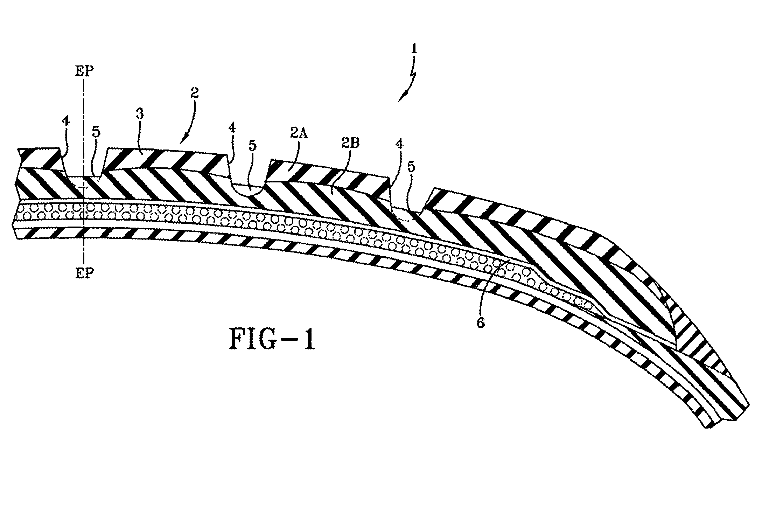

For a further understanding of this invention, drawings are provided in a form of FIGURE 1 as a partial cross-sectional view of a tire tread of a cap/base construction

### The Drawings

FIG 1 depicts a partial cross-sectional view of a tire tread 1 of a cap/base configuration comprised of a tread cap rubber layer 2 and underlying tread base rubber layer 6 with the tread lugs 3 and grooves 4.

The tread cap rubber layer 2 is composed of two layers, namely an outer tread cap rubber layer 2A and an underlying inner tread cap rubber layer 2B.

Tread wear indicators 5 are positioned within said tread grooves 4.

The outer tread cap rubber layer 2A is of a carbon black-rich rubber composition for promoting dry traction for the running surface of the tread 1.

The inner tread cap rubber layer 2B is of a softer, silica-rich rubber composition for promoting wet traction.

For this drawing, the rubber composition of said tread outer cap rubber layer 2A has a dynamic storage modulus G' (at 100°C, 1% strain and 1 Hertz) in a range of from 4,000 to 6,000 kPa and the rubber composition of said tread inner cap rubber layer 2 has a dynamic storage modulus G' (at 100°C, 1% strain and 1 Hertz) in a range of from 2,500 to 4,000 KPa, wherein said storage modulus G' of said rubber composition of said tread cap inner rubber layer 2B is at least 1,000 kPa less than said storage modulus G' of said rubber composition of said outer tread cap rubber layer 2A.

For this drawing, the Shore A (100°C) hardness of the rubber compositions of said tread outer cap rubber layer 2A and said tread inner cap rubber layer 2B are in a range of from 50 to 65 and within 5 Shore A hardness values of each other.

For this drawing, said carbon black-rich rubber composition of said outer tread cap rubber layer 2A contains 40 to 100 phr of rubber reinforcing carbon black and 5 to 30 phr of precipitated silica reinforcement together with a silica coupler, and said silica-rich rubber composition of said inner tread cap rubber layer 2B contains 50 to 100 phr precipitated silica together with a silica coupler and 10 to 45 phr of rubber reinforcing carbon black, wherein the rubber composition of said inner tread cap rubber layer 2B contains at least 20 phr more of said precipitated silica reinforcement than said rubber composition of said outer tread cap rubber layer 2A.

The circumferential inner tread cap layer 2B is internally contained within the tread and is therefore exclusive of an exposed surface of the tread until said outer tread cap rubber layer 2A wears away to geometrically stiffen the tread lugs 3 as they become shorter and expose at least a portion of the inner tread cap rubber layer (2A) during and as a result of use and service of the tire.

From FIG 1 it can be seen that the inner tread cap rubber layer 2B extends radially outward into an internal portion of the tread lugs 2 and beyond the height of the tread wear indicators 5.

In such configuration, as the outer tread cap rubber layer 2A wears away, the inner tread cap rubber layer 2B before the tread wear indicators 5 are reached and therefore becomes exposed and a portion of the running surface of the tread 1.

As the outer tread cap rubber layer 2A wears away, the height of the tread lugs 2 becomes geometrically reduced and thereby naturally becomes stiffer in nature and the traction of the tread lugs 2 on dry ground (dry traction of the tread running surface) becomes enhanced.

As the inner tread cap layer 2B becomes exposed to the running surface of the tire tread 1, the wet traction of the running surface of the tire tread 1 becomes enhanced (partly by the increased precipitated silica reinforcement content of the inner tread cap layer) without significantly reducing the original dry traction (via the geometrically stiffened bite of the tread lugs to the ground) of the running surface (dry traction before the aforesaid wearing away of the outer tread cap rubber layer 2A.

This, then, is considered herein as being a significant aspect of the invention.

In practice, the rubber compositions for the tread rubber layers, including the tread intermediate rubber layer, may be prepared in at least one preparatory (non-productive) mixing step in an internal rubber mixer, often a sequential series of at least two separate and individual preparatory internal rubber mixing steps, or stages, in which the diene-based elastomer is first mixed with the prescribed silica and/or carbon black as the case may be followed by a final mixing step (productive mixing step) in an internal rubber mixer where curatives (sulfur and sulfur vulcanization accelerators) are blended at a lower temperature and for a substantially shorter period of time.

It is conventionally required after each internal rubber mixing step that the rubber mixture is actually removed from the rubber mixer and cooled to a temperature below 40°C, perhaps to a temperature in a range of 20°C to 40°C and then added back to an internal rubber mixer for the next sequential mixing step, or stage.

Such non-productive mixing, followed by productive mixing is well known by those having skill in such art.

The forming of a tire component is contemplated to be by conventional means such as, for example, by extrusion of rubber composition to provide a shaped, unvulcanized rubber component such as, for example, the a tire tread.

It is understood that the tire, as a manufactured article, is prepared by shaping and sulfur curing the assembly of its components at an elevated temperature (e.g. 140°C to 170°C) and elevated pressure in a suitable mold. Such practice is well known to those having skill in such art.

The following Example is provided to further understand the invention.

### EXAMPLE I

Rubber compositions are prepared for providing a dual layered tire cap rubber layer as a portion of a tire tread of a cap/base construction comprised of a dual layered outer tread cap rubber layer and an underlying tread base rubber layer of a construction similar to FIG 1.

As in FIG 1, the tire cap rubber layer comprises an outer tread cap rubber layer 2A and an underlying tread cap inner rubber layer 2B with the tread cap inner rubber layer 2B thereby being between the outer tread cap rubber layer 2A and the tread base rubber layer.

Rubber Sample A is prepared for said outer tread cap rubber layer 2A and rubber Sample B is prepared for said inner tread cap layer 2B.

Rubber Sample A is comprises a carbon black-rich rubber composition which contained reinforcing filler comprising a combination of rubber reinforcing carbon black and precipitated silica in which the majority of the reinforcing filler was rubber reinforcing carbon black.

Rubber Sample B comprises of a silica-rich rubber which contained reinforcing filler comprising a combination of rubber reinforcing carbon black and precipitated silica in which the majority of the reinforcing filler was precipitated silica.

A coupling agent used for the rubber compositions.

The rubber compositions are prepared by mixing the ingredients in sequential non-productive (NP) and productive (PR) mixing steps in one or more internal rubber mixers.

The basic recipe for the rubber Samples A and B is presented in the following Table 1 and reported in parts by weight unless otherwise indicated.

**Table 1**

| ***Non-Productive Mixing Step (NP), (mixed to 170 °C)*** | Parts |
|---|---|
| S-SBR-A rubber¹ | 0 or 50 |
| S-SBR-B rubber² | 0 or 50 |
| E-SBR-C rubber³ | 0 or 60 |
| E-SBR-D rubber⁴ | 0 or 25 |
| 3,4-Polyisoprene rubber⁵ | 0 or 15 |
| Carbon black (N100 series)^{5A} | 0 or 80 |
| Carbon black (N200 series)^{5B} | 0 or 80 |
| Rubber processing oil and microcrystalline wax | 40 |
| Zinc oxide | 2 |
| Fatty acid⁶ | 2 |
| Antidegradant⁷ | 2.3 |
| Silica⁸ | 25 or 66 |
| Coupling agent⁹ | 2 or 5.5 |

| ***Productive Mixing Step (PR), (mixed to 120°C)*** | |
|---|---|
| Sulfur | 0.9 |
| Sulfenamide and thiuram disulfide cure accelerators | 3.5 |

| | |
|---|---|
| ¹Solution polymerization prepared high styrene styrene/butadiene copolymer rubber having a bound styrene content of about 40 percent and a vinyl content of about 14 percent. ²Solution polymerization prepared high styrene, high vinyl styrene/butadiene copolymer rubber having a bound styrene content of about 40 percent and a vinyl content of about 39 percent. ³Emulsion polymerization prepared high styrene styrene/butadiene copolymer rubber having a bound styrene content of about 40 percent and a vinyl content of about 10 percent. ⁴Emulstion polymerization prepared high styrene, high vinyl styrene/butadiene copolymer rubber having a bound styrene content of about 40 percent and a vinyl content of about 39 percent. ⁴Polyisoprene rubber (solution polymerization prepared) comprised of a 3,4-isometric content of about 60 percent and a trans 1,4-isometric content of about 12 percent ^{5A}ASTM designation ^{5B}ASTM designation ⁶Fatty acid comprised (composed) of at least 90 weight percent stearic acid and a minor amount of other fatty acid comprised (composed of) primarily of palmitic and oleic acids. ⁷Antidegradant of the phenylene diamine type ⁸As Zeosil 1165MP^{™} from Rhodia ⁹As Si266^{™} from Dow Corning comprised of a bis3(triethoxysilylpropyl) polysulfide with an average of from about 2 to about 2.6 connecting sulfur atoms in its polysulfidic bridge | |

The following Table 2 illustrates cure behavior and various physical properties (values rounded) of rubber compositions, namely rubber Samples A and B, based upon the recipe of Table 1.

**Table 2**

| | Outer Tread Cap Layer | Inner TreadCap Layer |
|---|---|---|
| ***Summary of Elastomers and Reinforcement*** | Sample A | Sample B |
| S-SBR-A rubber | 50 | 0 |
| S-SBR-B rubber | 50 | 0 |
| E-SBR-C rubber | 0 | 60 |
| E-SBR-D rubber | 0 | 25 |
| 3,4 Polyisoprene rubber | 0 | 15 |
| Carbon black (N100 series), phr | 80 | 0 |
| Carbon black (N200 series), phr | 0 | 36 |
| Silica (phr) | 25 | 66 |
| Coupling agent (phr) | 2 | 5.5 |

| ***Rheometer, 160°C*** | | |
|---|---|---|
| Maximum torque (dNm) | 19 | 17 |
| Minimum torque (dNm) | 4 | 3 |
| Delta torque (dNm) | 15 | 14 |

| ***Stress-strain, ATS¹, 16 min, 160°C*** | | |
|---|---|---|
| Tensile strength (MPa) | 15 | 17 |
| Elongation at break (%) | 500 | 550 |
| 300 % ring modulus (MPa) | 10 | 9 |

| ***Rebound*** | | |
|---|---|---|
| 23°C | 12 | 17 |
| 100°C | 37 | 45 |

| ***Shore A Hardness*** | | |
|---|---|---|
| 23°C | 79 | 73 |
| 100°C | 59 | 59 |

| ***RPA², 100°C, 1 Hertz*** | | |
|---|---|---|
| Storage modulus G'@ 1% strain (kPa) | 4550 | 3000 |

| | | |
|---|---|---|
| ¹Data according to Automated Testing System instrument by the Instron Corporation which incorporates a plurality of (e.g. six) tests in one system. Such instrument may determine physical properties such as ultimate tensile, ultimate elongation, and modulus. Data reported in the Table is generated by running the ring tensile test. ²Data according to Rubber Process Analyzer as RPA 2000™ (Alpha Technologies company). | | |

It can be seen from Table 2 that rubber Sample B (rubber composition for the inner tread cap rubber layer) had a 300 percent modulus of 9 MPa which was significantly less as compared to the 300 percent storage modulus of 10 MPa for rubber Sample A (rubber composition for the outer tread cap outer rubber layer).

This is considered herein to be significant in a sense of showing the rubber Sample B to be softer in the sense of 300 percent modulus than rubber Sample B.

It can also be seen from Table 2 that the Storage Modulus G' for rubber Sample B (rubber composition for the inner tread cap rubber layer) of 3,000 was significantly less than the Storage Modulus G' of 4,550 for rubber Sample A (rubber composition for the outer tread cap rubber layer).

This is considered herein to be significant in a sense of indicative of significantly better wet traction of the rubber composition of Sample B, as compared to the rubber composition of Sample A, for a tread running surface, particularly in view of the significantly increased silica reinforcement content (66 phr) of rubber Sample B as compared to the precipitated silica reinforcement content (25 phr) rubber Sample A.

This demonstrates a feasibility and benefit of providing a dual layered (two ply) tread cap rubber layer with an outer layer (rubber Sample A) having a tread running surface with promotes dry traction and an underlying secondary rubber layer (rubber Sample B) which can present a tread running surface when the outer tread cap rubber layer wears away which promotes wet traction (as compared to the outer tread cap rubber layer).

Moreover, the Shore A hardness of the rubber Sample B (rubber composition for the tread cap inner rubber layer) is less (softer) at room temperature (about 23°C) and substantially equal at 100°C to the Shore A hardness of the rubber Sample A (rubber composition for the tread cap outer rubber layer).

This is considered herein to be significant in the sense of showing that the rubber composition of the tread lugs have a similar Shore A hardness at a running temperature of the tire tread of about 100°C to promote a geometrically stiffing of the tread lugs even as the underlying tread inner rubber layer may become exposed as the lugs become shorter as tread wears away.

## Claims

1. A tire having a rubber tread (1) of a cap/base construction comprising a tread cap rubber layer (2A, 2B) and an underlying tread base rubber layer (6);
wherein said tread cap rubber layer comprises an outer tread cap rubber layer (2A) and an underlying inner tread cap rubber layer (2B);
wherein said tread cap rubber layer (2A, 2B) is composed of a lug and groove configuration with raised lugs (3) having tread running surfaces and grooves (4) positioned between said lugs (3), and wherein at least a portion of said grooves (4) extend through said outer tread cap rubber layer (2A) and into said tread cap inner rubber layer (2B), exclusive of said underlying tread base rubber layer (6), **characterized in that** the Shore A (100°C) hardness values of the rubber compositions of said outer tread cap rubber layer (2A) and said inner tread cap rubber layer (2B) are in a range of from 65 to 85 and said Shore A hardness of the rubber composition of said outer tread cap rubber layer (2A) is at least 5 Shore A hardness units greater than the said Shore A hardness of the rubber composition of said inner tread cap rubber layer (2B).

2. The tire of claim 1 wherein the rubber composition of said outer tread cap rubber layer (2A) has a dynamic storage modulus G' (at 100°C, 1% strain and 1 Hertz) in a range of from 3,000 to 7,000 kPa and the rubber composition of said inner tread cap rubber layer (2B) has a dynamic storage modulus G' (at 100°C, 1% strain and 1 Hertz) in a range of from 1,500 to 4,500 KPa; and wherein said storage modulus G' of said rubber composition of said inner tread cap rubber layer (2B) is at least 1,000 kPa less than said storage modulus G' of said rubber composition of said outer tread cap rubber layer (2A).

3. The tire of claim 1 or 2, wherein said circumferential outer tread cap rubber layer (2A) is a sulfur cured rubber composition comprising, based upon parts by weight per 100 parts by weight rubber (phr):
(A) 100 phr of at least one conjugated diene-based elastomer;
(B) from 30 to 110 phr of rubber reinforcing filler.

4. The tire of one of the previous claims, wherein said outer tread cap rubber layer (2A) is a sulfur cured rubber composition comprised of, based upon parts by weight per 100 parts by weight rubber (phr):
(A) 100 phr of at least one conjugated diene-based elastomer;
(B) from 30 to 110 phr of rubber reinforcing filler comprising:
(1) from 50 to 100 phr of a rubber reinforcing carbon black,
(2) from 5 to 40 phr of silica such as precipitated silica; and
(C) a silica coupler having a moiety reactive with hydroxyl groups on said silica and another different moiety interactive with said diene-based elastomer(s); and/or wherein
said inner tread cap rubber layer (2B) is a rubber composition comprising, based upon parts by weight per 100 parts by weight rubber (phr):
(D) 100 phr of at least one conjugated diene-based elastomer;
(E) from 50 to 110 phr of a rubber reinforcing filler comprised of:
(1) from 35 to 100 phr of silica such as precipitated silica,
and
(2) from 10 to 30 phr of a rubber reinforcing carbon black;
and
(F) a silica coupler having a moiety reactive with hydroxyl groups on said silica and another different moiety interactive with said diene-based elastomer(s).

5. The tire of one of the previous claims wherein said inner tread cap rubber layer (2B) extends radially outward into and within at least a portion of at least one of said tread lugs (3), and wherein said inner tread cap rubber layer (2B) extends radially outward beyond a treadwear indicator (5) positioned within an associated tread groove (4).

6. The tire of claim 6 wherein the inner tread cap layer (2B) within the tread lug (3) extends radially outward beyond the tread wear indicator (5) in a manner that the inner tread cap rubber layer (2B) becomes exposed to and thereby a part of the tire tread's running surface as said outer tread cap rubber layer (2A) wears away.

7. The tire of one of the previous claims wherein said coupling agent is a bis(3-trialkoxysilylalkyl) polysulfide which contains an average of from 2 to 4 connecting sulfur atoms in its polysulfidic bridge.

8. The tire of one of the previous claims wherein said coupling agent is a bis(3-triethoxysilylpropyl) polysulfide.

9. The tire of one of the previous claims wherein said coupling agent is an alkoxyorganomercaptosilane.

10. The tire of claim 1 wherein
said Shore A hardness of the rubber composition of said outer tread cap rubber layer (2A) is at least 10 Shore A hardness units greater than the said Shore A hardness of the rubber composition of said inner tread cap rubber layer (2B).

11. The tire of claim 1 wherein
said Shore A hardness of the rubber composition of said outer tread cap rubber layer (2A) is at least 15 Shore A hardness units greater than the said Shore A hardness of the rubber composition of said inner tread cap rubber layer (2B).

## Patentansprüche

1. Reifen, der eine Kautschuklauffläche (1) von einer Oberteil-/Unterteilkonstruktion, umfassend eine Laufstreifenoberteil-Kautschukschicht (2A, 2B) und eine darunterliegende Laufstreifenunterteil-Kautschukschicht (6), aufweist;
wobei die Laufstreifenoberteil-Kautschukschicht eine äußere Laufstreifenoberteil-Kautschukschicht (2A) und eine darunterliegende innere Laufstreifenoberteil-Kautschukschicht (2B) umfasst;
wobei die Laufstreifenoberteil-Kautschukschicht (2A, 2B) aus einer Stollen- und Rillenkonfiguration mit erhabenen Stollen (3), die Profillaufoberflächen aufweisen, und zwischen diesen Stollen (3) positionierten Rillen (4) zusammengesetzt ist, und wobei mindestens ein Teil dieser Rillen (4) sich durch die äußere Laufstreifenoberteil-Kautschukschicht (2A) und bis in die innere Laufstreifenoberteil-Kautschukschicht (2B), unter Ausschluss der darunterliegenden Laufstreifenunterteil-Kautschukschicht (6), erstrecken, **dadurch gekennzeichnet, dass** die Shore A-Härtewerte (100°C) der Kautschukzusammensetzungen der äußeren Laufstreifenoberteil-Kautschukschicht (2A) und der inneren Laufstreifenoberteil-Kautschukschicht (2B) in einem Bereich von 65 bis 85 liegen und die Shore A-Härte der Kautschukzusammensetzung der äußeren Laufstreifenoberteil-Kautschukschicht (2A) mindestens 5 Shore A-Härteeinheiten größer ist als die Shore A-Härte der Kautschukzusammensetzung der inneren Laufstreifenoberteil-Kautschukschicht (2B).

2. Reifen nach Anspruch 1, wobei die Kautschukzusammensetzung der äußeren Laufstreifenoberteil-Kautschukschicht (2A) einen dynamischen Lagermodul G' (bei 100°C, 1% Dehnung und 1 Hertz) in einem Bereich von 3.000 bis 7.000 kPa aufweist und die Kautschukzusammensetzung der inneren Laufstreifenoberteil-Kautschukschicht (2B) einen dynamischen Lagermodul G' (bei 100°C, 1% Dehnung und 1 Hertz) in einem Bereich von 1.500 bis 4.500 kPa aufweist; und wobei der Lagermodul G' der Kautschukzusammensetzung der inneren Laufstreifenoberteil-Kautschukschicht (2B) mindestens 1.000 kPa weniger beträgt als der Lagermodul G' der Kautschukzusammensetzung der äußeren Laufstreifenoberteil-Kautschukschicht (2A).

3. Reifen nach Anspruch 1 oder 2, wobei die umfangsgerichtete äußere Laufstreifenoberteil-Kautschukschicht (2A) eine schwefelvulkanisierte Kautschukzusammensetzung ist, umfassend, auf Basis von Gewichtsteilen je 100 Gewichtsteile Kautschuk (ThK):
(A) 100 ThK mindestens eines Elastomers auf Basis konjugierten Diens;
(B) 30 bis 110 ThK Kautschukverstärkungs-Füllstoff.

4. Reifen nach mindestens einem der vorgenannten Ansprüche, wobei die äußere Laufstreifenoberteil-Kautschukschicht (2A) eine schwefelvulkanisierte Kautschukzusammensetzung ist, umfassend, auf Basis von Gewichtsteilen je 100 Gewichtsteile Kautschuk (ThK):
(A) 100 ThK mindestens eines Elastomers auf Basis konjugierten Diens;
(B) 30 bis 110 ThK Kautschukverstärkungs-Füllstoff, umfassend:
(1) 50 bis 100 ThK eines Kautschukverstärkungs-Carbon Blacks,
(2) 5 bis 40 ThK Silika, wie etwa ausgefälltes Silika; und
(C) einen Silika-Haftvermittler mit einem Anteil, der mit Hydroxylgruppen an dem Silika reaktiv ist, und einem anderen, verschiedenen Anteil, der mit dem bzw. den dienbasierten Elastomer(en) in Wechselwirkung tritt; und/oder wobei
besagte innere Laufstreifenoberteil-Kautschukschicht (2B) eine Kautschukzusammensetzung ist, umfassend, auf Basis von Gewichtsteilen je 100 Gewichtsteile Kautschuk (ThK):
(D) 100 ThK mindestens eines Elastomers auf Basis konjugierten Diens;
(E) 50 bis 110 ThK eines Kautschukverstärkungs-Füllstoffs, bestehend aus:
(1) 35 bis 100 ThK Silika, wie etwa ausgefälltes Silika,
und
(2) 10 bis 30 ThK eines Kautschukverstärkungs-Carbon Blacks;
und
(F) einen Silika-Haftvermittler mit einem Anteil, der mit Hydroxylgruppen an dem Silika reaktiv ist, und einem anderen, verschiedenen Anteil, der mit dem bzw. den dienbasierten Elastomer(en) in Wechselwirkung tritt.

5. Reifen nach einem der vorgenannten Ansprüche, wobei die innere Laufstreifenoberteil-Kautschukschicht (2B) sich radial auswärts bis in und innerhalb mindestens eines Teil von mindestens einem der Profilstollen (3) erstreckt, und wobei die innere Laufstreifenoberteil-Kautschukschicht (2B) sich radial auswärts über einen in einer zugehörigen Profilrille (4) positionierten Profilabnutzungsindikator (5) hinaus erstreckt.

6. Reifen nach Anspruch 6, wobei die innere Laufstreifenoberteilschicht (2B) innerhalb des Profilstollens (3) sich radial auswärts auf eine Weise über den Profilabnutzungsindikator (5) hinaus erstreckt, dass die innere Laufstreifenoberteil-Kautschukschicht (2B) zu der Laufoberfläche des Reifenprofils freigelegt und dadurch ein Teil davon wird, wenn sich die äußere Laufstreifenoberteil-Kautschukschicht (2A) abnutzt.

7. Reifen nach einem der vorgenannten Ansprüche, wobei der Haftvermittler ein Bis(3-trialkoxysilylalkyl)polysulfid ist, das einen Durchschnitt von 2 bis 4 verbindenden Schwefelatomen in seiner Polysulfidbrücke enthält.

8. Reifen nach einem der vorgenannten Ansprüche, wobei der Haftvermittler ein Bis(3-triethoxysilylpropyl)polysulfid ist.

9. Reifen nach einem der vorgenannten Ansprüche, wobei der Haftvermittler ein Alkoxyorganomercaptosilan ist.

10. Reifen nach Anspruch 1, wobei die Shore A-Härte der Kautschukzusammensetzung der äußeren Laufstreifenoberteil-Kautschukschicht (2A) mindestens 10 Shore A-Härteeinheiten größer ist als die Shore A-Härte der Kautschukzusammensetzung der inneren Laufstreifenoberteil-Kautschukschicht (2B).

11. Reifen nach Anspruch 1, wobei die Shore A-Härte der Kautschukzusammensetzung der äußeren Laufstreifenoberteil-Kautschukschicht (2A) mindestens 15 Shore A-Härteeinheiten größer ist als die Shore A-Härte der Kautschukzusammensetzung der inneren Laufstreifenoberteil-Kautschukschicht (2B).

## Revendications

1. Bandage pneumatique possédant une bande de roulement en caoutchouc (1) comportant une structure de type sommet/base comprenant une couche de caoutchouc de sommet de bande de roulement (2A, 2B) et une couche de caoutchouc de base de bande de roulement sous-jacente (6) ;
dans lequel ladite couche de caoutchouc de sommet de bande de roulement comprend une couche de caoutchouc externe de sommet de bande de roulement (2A) et une couche de caoutchouc interne sous-jacente de sommet de bande de roulement (2B) ;
dans lequel lesdites couches de caoutchouc de sommet de bande de roulement (2A, 2B) se composent d'une configuration du type à barrettes et à rainures comportant des barrettes surélevées (3) possédant des surfaces de roulement de la bande de roulement et des rainures (4) disposées entre lesdites barrettes (3), et dans lequel au moins une portion desdites rainures (4) s'étend à travers ladite couche de caoutchouc externe de sommet de bande de roulement et jusque dans ladite couche de caoutchouc interne de sommet de bande de roulement (2B), à l'exclusion de ladite couche de caoutchouc de base de bande de roulement sous-jacente (6), **caractérisé en ce que** les valeurs de dureté Shore A (100 °C) décomposition de caoutchouc de ladite couche de caoutchouc externe de sommet de bande de roulement (2A) et de ladite couche de caoutchouc interne de sommet de bande de roulement (2B) se situe dans la plage de 65 à 85 et ladite dureté Shore A de la composition de caoutchouc de ladite couche de caoutchouc externe de sommet de bande de roulement (2A) est supérieure à concurrence d'au moins 5 unités de dureté Shore A à ladite dureté Shore A de la composition de caoutchouc de ladite couche de caoutchouc interne de sommet de bande de roulement (2B).

2. Bandage pneumatique selon la revendication 1, dans lequel la composition de caoutchouc de ladite couche de caoutchouc externe de sommet de bande de roulement (2A) possède un module de conservation dynamique G' (à 100 °C, à une déformation de 1 % et à une fréquence de 1 Hz) dans la plage de 3000 à 7000 kPa et la composition de caoutchouc de ladite couche de caoutchouc interne de sommet de bande de roulement (2B) possède un module de conservation dynamique G' (à 100 °C, à une déformation de 1 % et à une fréquence de 1 Hz) dans la plage de 1500 à 4500 kPa ; et dans lequel ledit module de conservation dynamique G' de ladite composition de caoutchouc de ladite couche de caoutchouc interne de sommet de bande de roulement (2B) est inférieur à concurrence d'au moins 1000 kPa audit module de conservation dynamique G' de ladite composition de caoutchouc de ladite couche de caoutchouc externe de sommet de bande de roulement (2A).

3. Bandage pneumatique selon la revendication 1 ou 2, dans lequel ladite couche de caoutchouc externe circonférentielle de sommet de bande de roulement (2A) est une composition de caoutchouc vulcanisé au soufre comprenant, en se basant sur des parties en poids par 100 parties en poids de caoutchouc (phr) :
(A) 100 phr d'au moins un élastomère à base de diène conjugué ;
(B) de 30 à 110 phr d'une matière de charge pour le renforcement du caoutchouc.

4. Bandage pneumatique selon une des revendications précédentes, dans lequel ladite couche de caoutchouc externe circonférentielle de sommet de bande de roulement (2A) est une composition de caoutchouc vulcanisé au soufre comprenant, en se basant sur des parties en poids par 100 parties en poids de caoutchouc (phr) :
(A) 100 phr d'au moins un élastomère à base de diène conjugué ;
(B) de 30 à 110 phr d'une matière de charge pour le renforcement du caoutchouc, comprenant :
(1) de 50 à 100 phr d'un noir de carbone pour le renforcement du caoutchouc ;
(2) de 5 à 40 phr de silice, telle que de la silice précipitée ; et
(C) un coupleur pour la silice possédant une fraction apte à réagir avec les groupes hydroxyle sur ladite silice et une autre fraction différente qui entre en interaction avec ledit/lesdits élastomères à base diénique ; et/ou dans lequel
ladite couche de caoutchouc interne de sommet de bande de roulement (2B) est une composition comprenant, en se basant sur des parties en poids par 100 parties en poids de caoutchouc (phr) :
(D) 100 phr d'au moins un élastomère à base de diène conjugué ;
(E) de 50 à 110 phr d'une matière de charge pour le renforcement du caoutchouc, comprenant :
(1) de 35 à 100 phr de silice, telle que de la silice précipitée ;
(2) de 10 à 30 phr d'un noir de carbone pour le renforcement du caoutchouc ; et
(F) un coupleur pour la silice possédant une fraction apte à réagir avec les groupes hydroxyle sur ladite silice et une autre fraction différente qui entre en interaction avec ledit/lesdits élastomères à base diénique.

5. Bandage pneumatique selon une des revendications précédentes, dans lequel ladite couche de caoutchouc interne de sommet de bande de roulement (2B) s'étend en direction radiale vers l'extérieur jusqu'au sein d'au moins une portion d'au moins une desdites barrettes de bande de roulement (3), et dans lequel ladite couche de caoutchouc interne de sommet de bande de roulement (2B) s'étend en direction radiale vers l'extérieur au-delà d'un indicateur d'usure de bande de roulement (5) qui est disposé au sein d'une rainure de bande de roulement associée (4).

6. Bandage pneumatique selon la revendication 5, dans lequel ladite couche de caoutchouc interne de sommet de bande de roulement (2B) au sein de la barrette de bande de roulement (3) s'étend en direction radiale vers l'extérieur au-delà de l'indicateur d'usure de bande de roulement (5) d'une manière telle que ladite couche de caoutchouc interne de sommet de bande de roulement (2B) est ainsi exposée à une partie de la surface de roulement de la bande de roulement du bandage pneumatique lorsque ladite couche de caoutchouc externe de sommet de bande de roulement (2A) s'use.

7. Bandage pneumatique selon une des revendications précédentes, dans lequel l'agent de couplage est un bis(3-trialcoxysilylalkyl) polysulfure qui contient en moyenne de 2 à 4 atomes de soufre de liaison dans son pont polysulfure.

8. Bandage pneumatique selon une des revendications précédentes, dans lequel ledit agent de couplage est un bis(3-triéthoxysilylpropyl) polysulfure.

9. Bandage pneumatique selon une des revendications précédentes, dans lequel ledit agent de couplage est un alcoxyorganomercaptosilane.

10. Bandage pneumatique selon la revendication 1, dans lequel ladite dureté Shore A de la composition de caoutchouc de ladite couche de caoutchouc externe de sommet de bande de roulement (2A) est supérieure à concurrence d'au moins 10 unités de dureté Shore A à ladite dureté Shore A de la composition de caoutchouc de ladite couche de caoutchouc interne de sommet de bande de roulement (2B).

11. Bandage pneumatique selon la revendication 1, dans lequel ladite dureté Shore A de la composition de caoutchouc de ladite couche de caoutchouc externe de sommet de bande de roulement (2A) est supérieure à concurrence d'au moins 15 unités de dureté Shore A à ladite dureté Shore A de la composition de caoutchouc de ladite couche de caoutchouc interne de sommet de bande de roulement (2B).
